(19) Europäisches Patentamt / European Patent Office / Office européen des brevets

(11) **EP 2 227 967 A1**

(12) **EUROPEAN PATENT APPLICATION**
published in accordance with Art. 153(4) EPC

(43) Date of publication:
**15.09.2010 Bulletin 2010/37**

(21) Application number: **08867415.5**

(22) Date of filing: **24.12.2008**

(51) Int Cl.:
*A23J 3/16* (2006.01)          *A23L 1/19* (2006.01)

(86) International application number:
**PCT/JP2008/073402**

(87) International publication number:
**WO 2009/084529 (09.07.2009 Gazette 2009/28)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.12.2007   JP 2007335784**
**16.06.2008   JP 2008156788**

(71) Applicant: **Fuji Oil Company, Limited**
**Chuo-ku**
**Osaka-shi**
**Osaka 542-0086 (JP)**

(72) Inventors:
• **MOTOYAMA, Takayasu**
  **Izumisano-shi**
  **Osaka 598-8540 (JP)**
• **KATO, Hiroyuki**
  **Izumisano-shi**
  **Osaka 598-8540 (JP)**

(74) Representative: **Hayes, Adrian Chetwynd**
**Boult Wade Tennant**
**Verulam Gardens**
**70 Gray's Inn Road**
**London WC1X 8BT (GB)**

(54) **NOVEL SOYBEAN PROTEIN MATERIAL AND METHOD FOR PRODUCING THE SAME**

(57)    Provided is a soybean protein material which shows high emulsion stability in the case where 30% by weight of sodium casein has been replaced with soybean protein. A sugar-containing soybean protein material is produced by mixing a soybean protein raw material with a reducing sugar and performing a heat treatment at a temperature higher than 100˚C and 170˚C or lower for 10 sec to 300 sec at pH 6.3 to 8.0, followed by a hydrolysis treatment. Further, a sugar-containing soybean protein material in which protein is contained in an amount of 80% by weight or more on a dry weight basis, the 0.22 M TCA solubility is 5% by weight or more, 180 $\mu$mol of more of sugar is bound per g of protein and the content of $\beta$-conglycinin in protein by the ELISA method is 35% or less, or a soybean protein material for a coffee whitener in which the 0.22 M TCA solubility is 15% by weight or more and 30% by weight or less, the protein solubility is 80% by weight or more, and the total content of $\beta$-conglycinin and glycinin by SDS-PAGE is 30% or less is used. By using these soybean protein materials having high emulsifiability, emulsions and foods and drinks can be obtained.

EP 2 227 967 A1

**Description**

Technical Field

The present invention relates to a sugar-containing soybean protein material and a production method for the same.

Background Art

Sodium caseinate has widely been used as a raw material in the markets of emulsified products such as liquid and powdery coffee whiteners, and emulsified fats and oils because sodium caseinate has high emulsifiability and emulsion stability. However, the purchase of sodium caseinate is becoming difficult because a demand for sodium caseinate is increasing worldwide in recent years. Also, a demand for a soybean protein material in the markets of emulsified products is increasing because of the trend of avoiding sodium caseinate-containing raw materials of animal origin due to problems such as accumulation of cholesterol from the viewpoint of recent health consciousness.

Attempts to produce liquid coffee whiteners by using soybean protein materials have heretofore been made. However, in the case where about 30% by weight of total protein in liquid coffee whitener is soybean protein, feathering occurs when used for coffee, thereby restricting the use as coffee whitener. Although Patent Document 1 discloses that a combined use of soybean protein isolate with sodium caseinate suppresses the feathering when coffee whitener is added to coffee, it does not achieve the suppression of water separation of the coffee whitener during storage.

Also, Patent Document 2 discloses liquid coffee whiteners obtainable by combinations of hydrolyzed soybean protein isolate and various emulsifying agents. However, the method does not achieve the suppression of water separation of the whitener during storage, either, though the feathering is suppressed. In brief, liquid coffee whitener capable of suppressing the feathering as well as capable of suppressing the water separation during storage, in which 30% by weight or more of total protein is soybean protein, has not been hitherto obtained.

As to powdery coffee whitener, an attempt to produce the whitener by a method using soybean protein is made in Patent Document 3. However, in the case where 80% by weight or more of total protein in the powdery coffee whitener is soybean protein, viscosity is increased during the preparation of a liquid mixture of raw materials, thereby preventing spray drying. Further, feathering occurs when added to coffee. Thus, powdery coffee whitener in which 80% by weight or more of total protein is soybean protein has not been hitherto obtained.

Meanwhile, reaction products of a reducing sugar and soybean protein isolate have been heretofore studied. For example, a reaction product formed by non-degraded soybean protein, a reducing sugar, and an amino group-containing compound is studied in Patent Document 4, but this is directed to the improvement of a flavor, and it is difficult to improve emulsion stability which is an object of the present invention. In Patent Document 5, there is a description of the preparation of a composite whose emulsifiability is improved by forming a mixed powder from soybean protein isolate and a polysaccharide, i.e., chitosan, followed by a Maillard reaction at 60°C for 7 days. However, such a long term reaction is difficult from the industrial viewpoint.

Patent Document 1: JP-A-51-144764
Patent Document 2: JP-A-6-303901
Patent Document 3: JP-A-6-30698
Patent Document 4: JP-A-2000-312562
Patent Document 5: JP-A-2005-187401

Disclosure of the Invention

Problems to be solved by the Invention

An object of the present invention is to obtain a soybean protein material having high emulsion stability as well as coffee whitener containing a large amount of soybean protein in its total protein and being free from feathering and water separation during storage.

The present inventors have intensively studied to achieve the above object, and have found that a novel soybean protein material having high emulsion stability can be obtained by mixing a reducing sugar with a soybean protein raw material, performing a heat treatment and subsequently a hydrolysis treatment. Further, the present inventors have succeeded in specifying the physical properties of a soybean protein material required for preparing liquid and powdery coffee whiteners, thereby obtaining coffee whitener containing soybean protein material and having good physical properties. Thus, the present invention has been completed.

More specifically, the present invention provides:

(1) A method for producing a sugar-containing soybean protein material, which comprises: mixing a soybean protein raw material with a reducing sugar; performing a heat treatment at pH 6.3 to 8.0 at a temperature higher than 100°C and 170°C or lower for 10 to 300 seconds; and performing a hydrolysis treatment;

(2) The method for producing a sugar-containing soybean protein material according to the above (1), wherein the reducing sugar is added in a ratio of 0.5% by weight or more per dry weight of the soybean protein raw material;

(3) The method for producing a sugar-containing soybean protein material according to the above (1), wherein the soybean protein material contains 80% by weight or more of protein on a dry weight basis and has the 0.22 M TCA solubility of 5% by weight or more;

(4) The method for producing a sugar-containing soybean protein material according to the above (1), wherein the soybean protein material has the protein solubility of 80% by weight or more;

(5) A sugar-containing soybean protein material comprising 80% by weight or more of protein on a dry weight basis, wherein the 0.22 M TCA solubility is 5% by weight or more and 35% by weight or less, and 180 μmol or more of a sugar is bound per g of protein;

(6) The sugar-containing soybean protein material according to the above (5), wherein the β-conglycinin content in protein by an ELISA method is 35% or less;

(7) The sugar-containing soybean protein material according to the above (5), wherein the protein solubility is 80% by weight or more;

(8) A food or drink obtainable by using the sugar-containing soybean protein material according to the above (5) or the sugar-containing soybean protein material produced by the method according to the above (1);

(9) The food or drink according to the above (8), which is an emulsified composition;

(10) The food or drink according to the above (9), which is selected from the group consisting of coffee whitener, flour paste, margarine, and an emulsified fat or oil;

(11) The food or drink according to the above (8), which is an acidic protein drink;

(12) A soybean protein material, wherein the 0.22 M TCA solubility is 15% by weight or more and 30% by weight or less; the protein solubility is 80% by weight or more; and the total content of β-conglycinin and glycinin in total protein by SDS-PAGE is 30% or less;

(13) The soybean protein material according to the above (12), which is used for coffee whitener;

(14) Coffee whitener obtainable by using the soybean protein material according to the above (12); and

(15) The coffee whitener according to the above (14), wherein the soybean protein material is soybean protein isolate.

Effect of the Invention

According to the present invention, it is possible to obtain and produce a soybean protein material having high emulsion stability, as well as it is possible to prepare good liquid coffee whitener free from feathering and water separation during storage and good powdery coffee whitener free from feathering and a viscosity increase during preparation.

(Soybean Protein Raw Material)

Hereinafter, the present invention will specifically be described. The soybean protein raw material in the present invention is a subject raw material to which a reducing sugar is added, followed by performing a heat treatment for preparing the sugar-containing soybean raw material of the present invention. Examples thereof include whole soymilk or defatted soymilk obtained by extracting a protein component from soybeans such as whole soybeans or defatted soybeans with water or warmed water and removing okara (soy pulp); soybean protein isolate obtained from the above soymilk by concentrating protein by a treatment with a UF membrane or by isoelectric precipitation with an acid; and a sterilized and dried product thereof. It is preferable to use a raw material having high protein purity such as soybean protein isolate as the soybean protein raw material because the sugar-containing soybean protein material finally obtained desirably contains 80% by weight or more of protein on a dry weight basis. For example, soybean protein isolate can be prepared as follows. That is, soymilk is obtained by adding water or warmed water to defatted soybeans, performing extraction in the vicinity of neutral pH, and separating okara. Then, pH of the soymilk is adjusted to around pH 4.5 to recover a precipitate of isoelectric precipitation. Water and an alkalizing agent are added to the precipitate to obtain an aqueous solution having a solid concentration of 5 to 15% by weight and pH of 5.7 to 8.0, preferable about 6.8 to 7.5. The solution of soybean protein isolate thus obtained can be used as it is for the subsequent steps, or it can be used by drying with or without sterilization and then dissolving again. It is possible to obtain a solution of a reducing sugar as described hereinafter in water in advance, followed by dissolving the soybean protein raw material into the solution.

(Addition of Reducing Sugar)

A reducing sugar is added to an aqueous solution of the soybean protein raw material thus obtained, e.g. an aqueous solution having a solid concentration (concentration of dried material) of 5 to 15% by weight, followed by performing a first stage-heat treatment. Examples of the reducing sugar used include monosaccharides such as L-arabinose, D-xylose, D-glucose, D-ribose, and D-fructose, disaccharides such as lactose and maltose, and tri- and higher-polysaccharides such as dextrin having reducing terminals. In view of the price of the reducing sugar used and the emulsifiability of the soybean protein material finally obtained, the reducing sugar is preferably a mono- or disaccharide, more preferably D-glucose, D-fructose, lactose, or maltose, most preferably D-glucose. Preferably, one or more reducing sugars selected from these reducing sugars can be added in an amount of 0.5% by weight or more, more preferably 2% by weight or more, based on the solid content of the soybean protein raw material in the aqueous solution. This amount is preferably 10% by weight or less. When the amount exceeds 10% by weight, coloring can occur in the sugar-containing soybean protein material obtained, and a protein content in the protein material is largely decreased. The protein material is adjusted to pH 6.3 to 8, preferably pH 7 to 8, before or after the addition of the reducing sugar. When the pH is lower, the protein material obtained has poor emulsifiability to cause water separation during storage of coffee whitener, for example. On the other hand, higher pH is not preferred because of the possible formation of lysinoalanine.

(First Stage-Heat Treatment)

After addition of the reducing sugar, the solution is subjected to a heat treatment under pressure at a temperature exceeding 100˚C, preferably 130˚C or higher and 170˚C or lower, preferably at 150˚C or lower. The heating time is 10 to 300 seconds, preferably 20 to 180 seconds. The soybean protein material obtained has poor emulsifiability, when the heating temperature is lower or the heating time is shorter. On the other hand, coloring of the soybean material and a load on equipment are increased when the heating temperature is higher or the heating time is longer.

(Hydrolysis Treatment)

Subsequently, the solution after the heat treatment is subjected to protein hydrolysis. While the hydrolysis can be performed non-enzymatically under acidic conditions, hydrolysis with a protease is preferred because it is effective for improvement of subsequent emulsifiability. Examples of the protease used herein include one or more kinds of proteases classified into "metal proteases" (e.g. *Bacillus* neutral proteinases, *Streptomyces* neutral proteinases, *Aspergillus* neutral proteinases, and Thermoase™), "acidic proteases" (e.g. pepsin, *Aspergillus* acidic proteinases and Sumizyme™ AP), "thiol proteases" (e.g. bromelain and papain), and "serine proteases" (e.g. trypsin, chymotrypsin, subtilisin, *Streptomyces* alkali proteinases, *Aspergillus* alkali proteinases, alcalase™ and bioprase™) in terms of protease classification.
The reaction pH and the reaction temperature are preferably those of optimum conditions of each protease or conditions that enable each protease to exert its activity. In general, the reaction pH is in the vicinity of the optimum pH of the enzyme, and the reaction is performed at a temperature of 0˚C to 100˚C, preferably 20˚C to 80˚C, more preferably 40˚C to 70˚C. While the reaction time varies depending on the pH and the temperature, the reaction is generally performed for 5 minutes to 12 hours, preferably 10 minutes to 6 hours. 0.22 M TCA solubility after the protease treatment is preferably 5% by weight or more, more preferably 30% by weight or less, and most preferably 8% by weight or more. The emulsifiability is poor when the TCA solubility is lower, and protein solubility is sometimes deteriorated when the TCA solubility is higher. Even when the addition of the reducing sugar and the heating treatment are performed after the hydrolysis treatment, the resulting soybean protein material hardly exerts high emulsifiability.

(Second Stage-Heat Treatment)

It is preferable to perform a further heat treatment after the hydrolysis by a protease. The heating temperature is preferably 110˚C to 170˚C, more preferably 130˚C to 170˚C. The heating time is preferably 3 to 20 seconds. One of major objects of the second stage-heat treatment is sterilization, and preferred conditions can be set for this purpose. The effect of sterilization is weak when the temperature is lower and the time is shorter, while problems of a flavor and coloring are liable to be caused when the temperature is higher and the time is longer.

(Sugar-Containing Soybean Protein Material)

The soybean protein material thus obtained exhibits higher emulsifiability and dispersibility of protein particles as compared with conventional soybean protein isolate. It is quite suitable as a raw material for emulsified products, and has the following physical properties. That is, the soybean protein material contains protein in an amount of 80% by weight or more on a dry weight basis and has a β-conglycinin content in protein detected by an ELISA method of 35% or less, 0.22 M TCA solubility of 5% by weight or more, and 180 μmol or more of sugar is bound to per g of protein. Further, protein solubility is preferably 80% by weight or more, and the 0.22 M TCA solubility is more preferably 30% by weight or less, most preferably 15% by weight. The β-conglycinin content in protein detected by an ELISA method is preferably 30% or less. The 0.22 M TCA solubility, protein solubility, protein determination, β-conglycinin content by an ELISA method, and an amount of binding sugar can be confirmed by the methods described hereinafter.

While it is possible to distribute and use the sugar-containing soybean protein material of the present invention obtained by the above-described step as it is in the form of a liquid, the sugar-containing soybean protein material can also be used by drying into a powder and blending it with various raw materials for various applications. As used herein, the term "soybean protein" means a molecule of protein derived from soybeans or a hydrolysate thereof, and is distinguished from a material containing other component(s) in addition to protein such as "soybean protein material", "soybean protein raw material", and "soybean protein isolate".

(Soybean Protein Material for Coffee Whitener)

Meanwhile, the soybean protein material suitably used for coffee whitener has the following properties, and a typical example thereof is the above-described sugar-containing soybean protein material. That is, examples of the soybean protein material for coffee whitener in the present invention include whole soymilk and defatted soymilk obtained by extracting a protein component from soybeans such as whole soybeans and defatted soybeans with water or warmed water and removing okara; and soybean protein isolate obtained from these soymilk by concentrating protein by a treatment with a UF membrane or by isoelectric precipitation with an acid. Further, neutralized products thereof, and sterilized and dried products thereof can also be used. In any event, it is essential to have all of the above physical properties, i.e., a) 0.22 M TCA solubility of the soybean protein material is 15% by weight or more and 30% by weight or less, b) protein solubility of the soybean protein material is 80% by weight or more, and c) a total content of β-conglycinin and glycinin in total protein detected by SDS-PAGE is 30% or less, and only the soybean protein material for coffee whitener which satisfies these properties can provide good coffee whitener free from feathering and water separation during storage. When the hydrolysis is performed so that 0.22 M TCA solubility becomes 15% by weight or more in a conventional production process, the protein solubility is lowered to less than 80% by weight. The soybean protein material for coffee whitener having the physical properties satisfying the conditions of the present invention can not be obtained by mere simple optimization, and it has not been known at all in the prior art that such a soybean protein material is suitable for coffee whitener. Sometimes, the total content of β-conglycinin and glycinin in total protein detected by SDS-PAGE exceeds 30% depending upon a particular protease selected. In such a case, the physical properties suitable for coffee whitener can not be obtained.

Further, more preferably, the 0.22 M TCA solubility described in a) is 20% by weight or more and 30% by weight or less, and the protein solubility described in b) is 80% by weight or more. When the 0.22 M TCA solubility is less than 15% by weight, the resulting coffee whitener is liable to cause feathering when it is added to coffee, and to cause its own oil-off and increase in viscosity. When the TCA solubility is more than 30% by weight or the protein solubility is less than 80% by weight, the resulting coffee whitener is liable to cause water separation due to weak emulsification. Furthermore, the soybean protein material is preferably soybean protein isolate obtained by neutralizing protein obtained from defatted soymilk by isoelectric precipitation because such a soybean protein material further suppresses feathering and water separation during storage. As used herein, the feathering means the formation of flocculated matter when adding coffee whitener to coffee; the oil-off means the formation of an oil film on coffee whitener; and the water separation means the separation of a water phase occurring during storage.

(Application of Soybean Protein Material)

The sugar-containing soybean protein material of the present invention can be used for various foods and drinks such as animal meat processed products, seafood paste products, baked confectioneries, and various drinks, and particularly suitable for emulsified compositions. In addition, an acidic protein drink is suitable as a drink.

Examples of the emulsified composition for which the sugar-containing soybean protein material of the present invention can be used include liquid coffee whiteners, powdery coffee whiteners, instant coffee powders, ice cream, iced milk, lacto ice, infant formulated milk powders, mayonnaise-like foods, cheese-like foods, flour paste, various margarine, powdered fats and oils, emulsified fats and oils, and emulsion stabilizing agents. In the production of these emulsified compositions, protein other than soybean protein such as milk protein can be used together with soybean protein. However, the smaller the amount of such other protein is, the greater the effect of the sugar-containing soybean protein material of the present invention is recognized.

The sugar-containing soybean protein material and the soybean protein material for coffee whitener, which are the products of the present invention, have physical properties quite suitable for a raw material of liquid and powdery coffee whiteners. While the soybean protein material can be distributed and used as it is in the form of a liquid to prepare coffee whitener, preferably, it is dried to prepare a powder, followed by blending with various raw materials to prepare liquid and powdery coffee whiteners.

(Liquid Coffee Whitener)

The liquid coffee whitener in the present invention means an oil-in-water type emulsion comprising as its components protein, lipid, and an emulsifying agent, which is in the form of a liquid at ordinary temperature. Preferably, the liquid coffee whitener has a composition of 3 to 10% by weight of protein, 10 to 40% by weight of lipid, 0.2 to 1.5% by weight of a phosphate, and 0.4 to 2.5% by weight of an emulsifying agent, and examples of the preferred viscosity of the liquid coffee whitener is 60 mPa·s or more. Examples of the protein component used for constituting the liquid coffee whitener include various protein raw materials and protein materials such as whole milk, defatted milk, casein, milk whey, soybean protein concentrate, soybean protein isolate, corn gluten, wheat gluten, egg white, and egg yoke. In particular, water separation after storage is effectively suppressed in the present invention as compared with a conventional soybean protein material even when soybean protein is contained in an amount of 30% by weight or more in total protein constituting the liquid coffee whitener. However, feathering and water separation is liable to occur when soybean protein exceeds 60% by weight. Therefore, liquid coffee whitener using the soybean protein material of the present invention preferably contains soybean protein in an amount of 30% by weight or more, more preferably 60% by weight or less in total protein thereof.

(Powdery Coffee Whitener)

The powdery coffee whitener in the present invention means an emulsified product comprising as its components protein, lipid, carbohydrate, and an emulsifying agent, which is in the form of a powder at ordinary temperature. Preferably, the powdery coffee whitener has a composition of 10 to 50% by weight of lipid, 4 to 20% by weight of protein, 20 to 70% by weight of carbohydrate, 0.2 to 1.5% by weight of a phosphate, and 0 to 10% by weight of an emulsifying agent. Examples of the protein component used for constituting the powdery coffee whitener include various protein raw materials and protein materials such as whole milk, defatted milk, casein, milk whey, soybean protein concentrate, soybean protein isolate, corn gluten, wheat gluten, egg white, and egg yoke. In the present invention, feathering and increase in viscosity during preparation can be effectively suppressed as compared with a conventional soybean protein material even when soybean protein is contained in an amount of 80% by weight or more in total protein constituting the powdery coffee whitener. Therefore, the powdery coffee whitener using the soybean protein material of the present invention preferably contains 80% by weight or more of soybean protein in total protein thereof.

(Production Method of Coffee Whitener)

For preparing the liquid and powdery coffee whiteners, the raw materials are mixed in a water system, and the lipid contained therein is subjected to homogenization. The homogenization means that an oil-in-water type emulsion is prepared from a liquid mixture containing water and oil, followed by finely dividing oil droplets in the oil-in-water type emulsion. As one method for finely dividing oil droplets, there is a method using an apparatus such as an emulsifier. Examples of the emulsifier include a stirrer having rotary blade(s), a colloid mill having a disk or a rotor capable of high speed revolution and a fixed disk, an ultrasonic emulsifier, and a homogenizer which is a kind of high pressure pumps. Among the above apparatuses, a homogenizer is preferred. For example, the homogenization step can be performed by homogenizing an oil-in-water type emulsion containing the above-described raw materials with an homogenizer at pressure of 30 to 200 kg/cm$^2$, sterilizing at 110°C to 150°C, preferably 120°C to 140°C for 1 to 10 seconds, preferably 3 to 7 seconds, and then further homogenizing with a homogenizer at pressure of 150 to 500 kg/cm$^2$

The liquid coffee whitener of the present invention can be distributed together with a container in which the above-described oil-in-water type emulsion is filled. This has the advantages of easy storage and transportation and makes it possible to use the coffee whitener at anytime when needed because the coffee whitener can be heat-sterilized and aseptically filled in the container. Further, this has such an advantage that oil-off and water separation during storage hardly occur as compared with coffee whitener using a conventional soybean protein material. As the filling method, for example, the coffee whitener is heat-sterilized, followed by aseptically filling in a container (e.g. a combination of UHT sterilization and aseptic filling), or the coffee whitener is heat-sterilized together with a container after filling the coffee whitener in the container (e.g. retort sterilization). In a UHT sterilization method, either of indirect and direct heating methods can be employed. Further, coffee whitener can be prepared and distributed in the form of a dry powder without performing sterilization of an aqueous solution thereof and then it is reconstituted with water immediately before use. In such a case, it is also possible to obtain the coffee whitener having the desired physical properties and free from feathering and water separation by using the sugar-containing soybean protein material and the soybean protein material for coffee whitener of the present invention.

(Flour Paste)

The highly emulsifying type soybean protein material of the present invention can be used for the following emulsified compositions.

Flour paste means an oil-in-water type emulsified composition comprising as its components, for example, lipid, protein, an emulsifying agent, carbohydrate, and an acidifying agent. By using the sugar-containing soybean protein material of the present invention, effects such as heat resistant shape retention and storage stability can be obtained. For example, flour paste comprises raw materials such as the sugar-containing soybean protein material of the present invention, conventional fats and oils, saccharides, starch raw materials, soluble salts, and an acidifying agent, and can be obtained by preliminarily emulsifying a mixture of the raw materials, adjusting pH if necessary, followed by subjecting to homogenization, heating, gelatinization, and cooling. The flour paste preferably contains 0.1 to 5% by weight of the highly emulsifying type soybean protein material of the present invention.

(Choux Margarine)

While the highly emulsifying type soybean protein material of the present invention can be used for various margarine, it is suitably used for choux margarine. The choux margarine means a water-in-oil type emulsion composition comprising as its components, for example, lipid, protein, an emulsifying agent, carbohydrate, and a phosphate salt. By using the sugar-containing soybean protein material of the present invention, effects such as shape retention and storage stability when baking choux dough can be obtained. Choux margarine can be produced by mixing lipid with water soluble components such as the soybean protein material of the present application, saccharides, salt, a milk powder, and fermented milk, preliminarily emulsifying the resulting mixture, and performing rapid cooling and kneading with an apparatus such as a perfector, a votator, or a combinator. The choux margarine preferably contains 1 to 10% by weight of the highly emulsifying type soybean protein material of the present invention.

(Powdery Emulsified Fat or Oil)

Emulsified fat or oil means a water-in-oil type emulsion composition comprising as components, for example, lipid, protein, an emulsifying agent, and carbohydrate. By using the sugar-containing soybean protein material of the present invention, effects such as suppression of oil-off which will otherwise occur when powdering performed can be obtained. The emulsified fat or oil can be obtained by adding an oil phase to an aqueous phase, stirring the resulting mixture with, for example, a homomixer, homogenizing with, for example, a homogenizer at pressure of 30 to 200 kg/cm$^2$, followed by cooling and spray-drying. The powdery emulsified fat or oil preferably contains 0.5 to 7% by weight of the highly emulsifying type soybean protein material of the present invention.

(Acidic Protein Drink)

Further, the soybean protein material of the present invention can be suitably used for acidic protein drinks. The acidic protein drink means a drink comprising as its components carbohydrate, protein, and a stabilizing agent (e.g. pectin, CMC, or water soluble soybean polysaccharide) and has pH of 3 to 6. Examples of the protein constituting the acidic protein drink include various protein raw materials and protein materials such as whole milk, defatted milk, casein, milk whey, soybean protein concentrate, soybean protein isolate, corn gluten, wheat gluten, egg white, and egg yoke. By adding the sugar-containing soybean protein material of the present invention to the drink, effects such as suppression of formation of a precipitate during storage can be obtained. The acidic protein drink preferably contains 0.1 to 5% by weight of the highly emulsifying type soybean protein material of the present invention.

(Measurement Methods)

Hereinafter, measurement methods used in the present invention will be described.

<Protein Content>

Mass of nitrogen of a soybean protein material dried at 105˚C for 12 hours is measured by a Kjeldahl method and the amount of protein is calculated by using the nitrogen coefficient of 6.25. The protein content is expressed in terms of % by weight in the dried material.

<0.22 M TCA Solubility>

The same amount of 0.44 M trichloroacetic acid (TCA) is added to an aqueous solution of 2% by weight of a soybean protein material sample, and the proportion of soluble nitrogen is measured by a Kjeldahl method.

<Protein Solubility>

An aqueous solution of 5% by weight of a soybean protein material sample is centrifuged at 7,000 × g (3,500 rpm) for 20 minutes, and the amount of protein contained in the resulting supernatant is measured by a Kjeldahl method. The proportion thereof represents the protein solubility.

<Biuret Test>

One mL of a soybean protein material sample having a concentration of about 1% by weight is weighed out and then mixed with 4 mL of a biuret solution, followed by thoroughly mixing and stirring the resulting mixture. After allowing the mixture to stand at room temperature for 30 minutes, absorbance at a wavelength of 540 nm is measured. Quantity determination is performed by preparing a calibration curve with a BSA standard solution (manufactured by Wako Pure Chemical Industries, Ltd.).

<Measurement of Amount of Binding Sugar>

The amount of sugar in a component insoluble in an aqueous solution of 80 vol% of propanol is determined by a phenol sulfuric acid method to measure the amount of binding sugar. That is, 4 mL of 2-propanol (manufactured by Kishida Chemical Co., Ltd.) is added to 1 mL of an aqueous solution of 5% by weight of a soybean protein material sample and the mixture is thoroughly stirred. After allowing the mixture to stand at room temperature for 10 minutes, the mixture is stirred at 3,000 rpm for 10 minutes to recover a precipitate. To the precipitate is added 5 mL of a solution of 80 vol% of 2-propanol and the resulting mixture is stirred at 3,000 rpm for 10 minutes to recover a precipitate. This operation was repeated once again to recover a precipitate. To the precipitate is added 5 mL of 1 M NaOH to thoroughly suspend the precipitate therein, followed by heating for 10 minutes to dissolve the precipitate. The sample dissolved by heating is cooled in a water bath, and the amount of protein is determined by a quantity determination method of protein (biuret test), followed by adjusting the sample concentration to 15 mg/ml. To 0.8 mL of deionized water is added 0.2 mL of the concentration-adjusted sample, and to the mixture is added 1 mL of an aqueous solution of 5% by weight of phenol, followed by thoroughly stirring the mixture. To this sample suspension is quickly added 5 mL of concentrated sulfuric acid and the mixture is allowed to stand at room temperature for 10 minutes. After allowing the mixture to stand, the mixture is thoroughly stirred and allowed to stand in a water bath for 10 minutes. Absorbance at a wavelength of 490 nm is measured. The quantity determination is performed by preparing a calibration curve with D-glucose (manufactured by Wako Pure Chemical Industries, Ltd.). The amount of protein of the concentration-adjusted sample is determined to calculate the amount of binding sugar according to the following equation:

$$\text{Amount of binding sugar} = \text{sugar concentration (µmol)/amount of protein (g)}.$$

<Measurement of β-Conglycinin Content>

β-Conglycinin content is determined by an ELISA method. A 0.1 g aliquot of a sample is accurately weighed and placed in a 50 mL Erlenmeyer flask with a stopper, and 2.5 mL of a 0.05 M Tris-HCl buffer solution (pH 8.2) and 7.5 mL of an 8 M Urea-DTT buffer solution are added thereto. Extraction is performed at 100˚C for 1 hour. After the extraction, re-association with a 0.4 M NaCl solution (pH 9.0) containing cystine is performed, followed by making up the volume to 100 mL. Its filtrate was used as a sample for ELISA. Each of the sample and β-conglycinin for a calibration curve (manufactured by Fuji Oil Company, Limited) is immobilized on a 96 well EIA microplate for ELISA (manufactured by Iwaki & Co., Ltd.) by storing it at 4˚C for 1 day, and blocking is performed by adding 200 µL of a blocking solution (manufactured by Dainippon Sumitomo Pharma Co., Ltd.) and incubating at 37˚C for 2 hours. After blocking, the microplate is washed with a 50 mM phosphate buffer solution (pH 7.2) three times. Then, 100 µL of an anti-β-conglycinin rabbit polyclonal antibody (0.5 µg/mL, manufactured by Takara Bio Inc.) is added as a primary antibody, followed by incubation at 37˚C for 1 hour. The microplate is washed with a 50 mM phosphate buffer solution (pH 7.2, 0.1% Tween 20) three times. After washing, 100 μL of a peroxidase conjugated anti-rabbit IgG antibody (0.1 μg/mL, manufactured by Promega Corporation) is added as a secondary antibody, followed by incubation at 37˚C for 1 hour. The microplate is washed with a 50 mM phosphate buffer solution (pH 7.2; 0.1% Tween 20) three times. After washing, 100 μL of TIB Micowell Peroxidase Substrate (manufactured by KPL, Kirkegaard & Perry Laboratories, Inc.) is added to develop color for 5 minutes. After ceasing the color development reaction by adding 100 μL of IN sulfuric acid, absorbance is measured at a wavelength of 450 nm. After the measurement, a calibration curve is prepared by using the absorbance of β-conglycinin for a calibration curve. The β-conglycinin content of the sample is calculated and a ratio thereof to total protein measured by a Kjeldahl method is calculated.

<Total Content of β-Conglycinin and Glycinin>

The total content of β-conglycinin and glycinin is measured by SDS-PAGE. That is, 100 μL of a SDS-PAGE sample buffer (manufactured by Cosmo Bio Co., Ltd.) is added to 100 μL of an aqueous solution of 1% by weight of a soybean protein material, followed by heating at 95˚C for 10 minutes to prepare a sample solution. To a SDS-PAGE gel (5% to 20% of Supersep™ manufactured by Wako Pure Chemical Co., Ltd.) is applied 4 μL of the sample solution thus prepared, followed by electrophoresis. Then, the gel subjected to the electrophoresis is stained with Coomassie brilliant blue, followed by decoloration to obtain an electrophoresed gel.
The gel thus obtained by SDS-PAGE is scanned with a scanner to capture its image data in a PC, and integration values of the entire lane and bands of β-conglycinin (7S globulin) and glycinin (11S globulin) in the lane are measured by using Scion Image™ (manufactured by Scion Corporation) and analyzed the total content of β-conglycinin and glycinin as the content thereof in total protein.

Examples

Hereinafter, embodiments of the present invention will specifically be illustrated with reference to Examples.

Production Method of Sugar-Containing Soybean Protein Material (Soybean Protein Materials A to C)

Defatted soymilk was obtained by adding 10 parts by weight of water to 1 part by weight of slightly denatured defatted soybeans, performing extraction at 50˚C for 30 minutes with stirring using a homomixer (manufactured by Tokushukika Kogyo, Co., Ltd.), and centrifuging at 3,000 × g to remove okara. The defatted soymilk obtained was subjected to isoelectric precipitation by adjusting to pH 4.5 with hydrochloric acid, followed by centrifugation to obtain acid-precipitated curd. To the curd was added 4-fold amount of water, and pH was adjusted to 7.3 with sodium hydroxide to obtain a solution containing soybean protein isolate. After adding an anhydrous crystalline glucose (manufactured by San-Ei Sucrochemical Co., Ltd.) in an amount of 1% by weight relative to the solid content of the solution, aliquots of the solution thus obtained were heated at 90˚C, 110˚C, and 140˚C for 30 seconds in a continuous direct heating sterilizer (manufactured by Alfa Laval, Japan), respectively. To each of the sterilized solutions was added 0.2% by weight of an alcalase™ (manufactured by Novozymes, Japan) relative to the solid content of the soybean protein isolate, and an enzyme reaction was performed at 55˚C for 15 minutes. After the enzyme reaction, each reaction mixture was heated with a continuous direct heating sterilizer at 140˚C for 10 seconds, followed by spray drying with a spray drier to obtain a powdery sugar-containing soybean protein material (soybean protein materials A to C).

Selection of Sugar (Soybean Protein Materials D to H)

According to the same treatment as that for obtaining soybean protein material C, soybean protein materials were obtained except-for adding 1% by weight of various kinds of sugar (xylose, maltose, lactose, sucrose, and trehalose) to the soybean protein isolate, respectively, in place of the anhydrous crystalline glucose.

Selection of Amount of Sugar Added (Soybean Protein Materials I to M)

According to the same manner as that for obtaining soybean protein material C, soybean protein materials I to M were obtained except for changing the amount of glucose added to 0, 3, 6, 8, and 10% by weight relative to the solid content, respectively.

Investigation of Amount of Enzyme Added (Soybean Protein Materials N to S)

According to the same manner as that for obtaining soybean protein material C, soybean protein materials N to S were obtained except for changing the amount of glucose added to 1% by weight relative to the solid content and changing the amount of the protease added to 0, 0.02, 0.05, 0.10, 0.15, and 0.40% by weight relative to the solid content, respectively.

Investigation of Amount of Enzyme Added 2 (Soybean Protein Materials T to V)

According to the same manner as that for obtaining soybean protein material C, soybean protein materials T to V were obtained except for changing the pH in the first stage heating from 7.0 to 6.5, changing the heating time of the first stage heating at 140˚C for 30 seconds to 60 seconds, and changing the amount of the protease added to 0.2, 0.3, and 0.4% by weight relative to the solid content, respectively.

Investigation of Glucose-Free Materials (Soybean Protein Materials W to Y)

According to the same manner as that for obtaining soybean protein material T, soybean protein materials W to Y were obtained except that no glucose was added and the amount of the protease added was changed to 0.2, 0.1, and 0.05% by weight relative to the solid content, respectively.

Investigation of pH during Heating (Soybean Protein Material Z)

According to the same manner as that for obtaining soybean protein material C, soybean protein material Z was obtained except for changing the pH in the first stage heating from pH 7.0 to 6.0 and changing the heating time of the first stage heating at 140˚C for 30 seconds to 60 seconds.

Investigation of Production with Omitting First Stage-Heat Treatment (Soybean Protein Material α)

According to the same manner as that for obtaining soybean protein material C, soybean protein material α, was obtained except for changing the pH of the dilution of the acid-precipitated curd to 7.0 and performing the protease treatment with omitting the first stage-heat treatment.

Investigation of β-Conglycinin Content (Soybean Protein Materials β to γ)

A β-conglycinin concentrate material was obtained by separating β-conglycinin from soybean protein isolate according to the production method disclosed in WO 02/28198. This β conglycinin concentrate material was heated at 140˚C for 30 seconds, followed by spray-drying to obtain powdery soybean protein material β. Further, according to the same manner as that in Comparative Example 4 (soybean protein material I), the protease hydrolysis treatment was performed on the β-conglycinin concentrate material to obtain powdery soybean protein material γ.

Preparation of Liquid Coffee Whiteners

Liquid coffee whiteners were prepared by using as protein materials soybean protein materials A to Z, α to γ, and commercially available soybean protein isolate (TCA solubility: 22.2% by weight; Fujipro CLE™ manufactured by Fuji Oil Company, Limited), and sodium caseinate (ALANATE 180™ manufactured by Fonterra Japan, Ltd.). First, 73 parts by weight of water was heated to 70˚C, 0.4 part by weight of dipotassium phosphate was dissolved therein, to this hot solution was added 5 parts by weight of a mixture of equal amounts of each of the above protein materials and sodium caseinate, and then, 0.5 part by weight of a sugar ester (DK Ester F160™ manufactured by Dai-Ichi Kogyo Seiyaku Co., Ltd.) was added thereto, followed by stirring. Further, 20 parts by weight of hydrogenated rapeseed oil (hydrogenated rapeseed oil (melting point: 22˚C) manufactured by Fuji Oil Company, Limited) was added thereto, followed by mixing with stirring in a hot water bath at 90˚C to obtain an oil-in-water type emulsion. The oil-in-water type emulsion thus obtained was homogenized with a homogenizer at a pressure of 100 to 200 kg/cm$^2$, sterilized by heating at 80˚C for 10 minutes, and subjected to 2-stage homogenization with a homogenizer again at first homogenization pressure of 100 to 300 kg/cm$^2$ and second homogenization pressure of 50 to 100 kg/cm$^2$, followed by cooling to obtain liquid coffee whitener. Further, according to the same manner, coffee whitener was prepared as Comparative Example 18 except for using a mixture of 30% by weight of Supro 710™ (manufactured by Solae, LLC.) and 70% by weight of sodium caseinate. As Comparative Example 19, coffee whitener was prepared by using a mixture of 70% by weight of soybean protein material U and 30% by weight of sodium caseinate.

Evaluation of Coffee Whiteners

<Evaluation of Feathering>

The degree of feathering was evaluated by way of visual observation by dissolving 2 g of a commercially available instant coffee in hot water, slowly adding dropwise 5 ml of each of the above prepared coffee whiteners, and stirring after 30 seconds. In the tables hereinafter, no feathering, a little feathering, and remarkable feathering are represented by "-", "$\pm$", and "+", respectively.

<Water Separation Ratio after Storage of Liquid Coffee Whitener>

Each of the above prepared coffee whiteners was filled in a 200 ml storage jar and stored at 4°C for a week (soybean protein materials A to S, Z, and $\alpha$ to $\gamma$) or at 50°C for 24 hours (soybean protein materials T to Y, Comparative Examples 15 to 19, and Example 15). After storage, a water separation ratio was measured. In the tables hereinafter, no water separation, a little water separation, and remarkable water separation were represented by "-", "$\pm$", and "+", respectively. Further, the degree of oil-off was confirmed. In the tables hereinafter, no oil-off, a little oil-off, and remarkable oil-off were represented by "-", "$\pm$", and "+", respectively.

<Viscosity and Emulsion Particle Diameter of Coffee Whitener>

Viscosity of each of the coffee whiteners was measured with a B type viscometer (manufactured by Tokimec, Inc.), and the emulsion particle diameter was measured with a laser particle size distribution analyzer (manufactured by Shimadzu Corporation).

Comparison of Analyzed Values of Soybean Protein Materials

Evaluations of physical properties of soybean protein materials A to Z and $\alpha$ were summarized in the upper column of Table 1. Soybean protein materials B to F, J to M, and O to U satisfied the conditions of "15 to 30% by weight of TCA solubility and 80% by weight or more of protein solubility". Thus, they had the excellent physical properties as coffee whitener. In contrast, soybean protein materials A, G to I, W, and Z had low protein solubility, and soybean protein materials N, O, X, and Y had low TCA solubility. Soybean protein materials S and V had high TCA-solubility and low protein solubility.

The amounts of binding sugar of soybean protein materials A to T and Z were also summarized in Table 1. Soybean protein material A had the protein solubility of less than 80% by weight and the amount of binding sugar of less than 180 $\mu$mol/g protein. In contrast, soybean protein materials B and C had the protein solubility of more than 80% by weight and the amount of binding sugar of more than 180 $\mu$mol/g protein.

Next, soybean protein materials D to F had the protein solubility of more than 80% by weight, while soybean protein materials G and H had the protein solubility of less than 80% by weight and the amount of binding sugar of less than 180 $\mu$mol/g protein. Therefore, it has been considered that only the reducing sugar reacted with the soybean protein. Further, since fructose had the protein solubility of 82% by weight, it was inferred that fructose reacted in the same manner as that of other reducing sugar.

In view of the fact that the amount of binding sugar in the soybean protein material increased in a glucose concentration-dependent manner as compared with those of soybean protein materials C and I to M, it was inferred that the sugar was bound to the soybean protein at least at such strength that the bond was not dissociated by the water-containing isopropyl alcohol treatment in the above-described preparation method. Further, it was confirmed from soybean protein materials S and V obtained by using larger amounts of the added enzyme that the protein solubility was reduced when the 0.22 M TCA solubility exceeded 30% by weight. Soybean protein material Z whose pH during heating was low had a lower amount of binding sugar despite the increase in heating time. Further, the TCA solubility and the protein solubility could not be maintained in the appropriate range simultaneously in soybean protein materials W to Y wherein only the heat history and the protease treatment were performed without addition of sugar.

The foregoing respective evaluations were put together to show overall evaluations of coffee whiteners in Table 1. In Table 1, "○", "△", and "×" represented good, somewhat good, and defective. Water separation of coffee whitener was not suppressed in case of soybean protein material A, while the water separation ratio tended to be suppressed in case of soybean protein material B. In case of soybean protein material C, the water separation ratio was good enough for being lower than that in case of sodium caseinate (Comparative Example 15). Soybean protein materials C to F suppressed the water separation of coffee whiteners after storage to show good properties, while soybean protein materials G to I had the water separation ratios after storage that exceeded 30% by weight as with Fujipro CLE™ of Comparative Example 16 in which only hydrolysis of soybean protein isolate was performed and conventional soybean protein material Supro 710™ of Comparative Example 17. In addition, poor emulsion stability was recognized. Thus, it was found that the use of the reducing sugar was effective.

Very poor emulsion stability was recognized in non-degraded soybean protein material N in which the protease treatment was not performed because the coffee whitener showed much feathering and was solidified after storage. Meanwhile, as to soybean protein materials O to R, T, and U obtained by performing the protease treatment, although much feathering was observed in particular with respect to soybean protein material O, the water separation after storage was suppressed, thereby showing that the protease treatment was very effective for improving the emulsion stability. Further, It has been confirmed that the water separation ratio was somewhat increased in soybean protein materials S and V whose 0.22 M TCA solubilities exceeded 30% by weight. The water separation ratio of soybean protein material U having the low amount of binding sugar was high, and the emulsion stability thereof was low. In soybean protein material α obtained by omitting the first stage heating, oil-off and feathering occurred despite of adjusting its TCA solubility and its protein solubility to the appropriate ranges of 15% by weight or more and 80% by weight or more, respectively, because a part of β-glycinin (7S) and glycinin (11S) was not degraded and the total content of 7S and 11S became 30% or more. Water separation after storage also occurred (Comparative Example 12).

As described above, the adaptability as coffee whitener defined by the TCA solubility, the protein solubility, and the 7S/11S content was greatly correlated with the adaptability as coffee whitener defined by the TCA solubility and the amount of binding sugar.

Table 1

(Production Conditions for Soybean Protein Materials,

Physical Properties of Soybean Protein Materials, and Physical Properties of Coffee Whiteners)

| | Soybean Protein Material | pH | Protease (%) | Added Sugar Type | Added Sugar Amount (%) | Temperature (°C) | Period (second) | TCA (%) | Amount of binding sugar (μmol/g protein) | Protein Solubility (%) | Protein Content (%) | 7S+11S Content (%) | Viscosity (25°C) (mPa·s) | Emulsion Particle Diameter (μm) | Oil-Off | Water Separation Ratio (%) | Feathering | Overall Evaluation |
|---|---|---|---|---|---|---|---|---|---|---|---|---|---|---|---|---|---|---|
| Comparative Example 1 | A | 7.0 | 0.20 | Glucose | 1.0 | 90 | 30 | 24.2 | 170 | 78 | – | – | 44 | 0.58 | – | 18 | – | × |
| Example 1 | B | ↑ | ↑ | ↑ | ↑ | 110 | ↑ | 23.4 | 182 | 82 | – | – | 55 | 0.61 | – | 9 | – | △ |
| Example 2 | C | ↑ | ↑ | ↑ | ↑ | 140 | ↑ | 25.5 | 181 | 84 | – | – | 65 | 0.61 | – | 5 | – | ○ |
| Example 3 | D | ↑ | ↑ | Xylose | ↑ | ↑ | ↑ | 25.6 | 182 | 84 | – | – | 60 | 0.58 | – | 6 | – | ○ |
| Example 4 | E | ↑ | ↑ | Maltose | ↑ | ↑ | ↑ | 25.6 | 181 | 83 | – | – | 62 | 0.57 | – | 5 | – | ○ |
| Example 5 | F | ↑ | ↑ | Lactose | ↑ | ↑ | ↑ | 26.0 | 183 | 84 | – | – | 59 | 0.55 | – | 5 | – | ○ |
| Comparative Example 2 | G | ↑ | ↑ | Sucrose | ↑ | ↑ | ↑ | 24.9 | 176 | 75 | – | – | 49 | 0.63 | – | 35 | – | × |
| Comparative Example 3 | H | ↑ | ↑ | Trehalose | ↑ | ↑ | ↑ | 25.0 | 172 | 74 | – | – | 51 | 0.57 | – | 43 | – | × |
| Comparative Example 4 | I | ↑ | ↑ | – | 0 | ↑ | ↑ | 23.2 | 175 | 75 | 90 | – | 50 | 0.58 | – | 35 | – | × |
| Example 6 | J | ↑ | ↑ | Glucose | 3.0 | ↑ | ↑ | 23.7 | 183 | 85 | 87 | – | 62 | 0.56 | – | 5 | – | ○ |
| Example 7 | K | ↑ | ↑ | ↑ | 6.0 | ↑ | ↑ | 24.1 | 189 | 88 | 84 | – | 65 | 0.58 | – | 5 | – | ○ |
| Example 8 | L | ↑ | ↑ | ↑ | 8.0 | ↑ | ↑ | 24.3 | 193 | 89 | 81 | – | 71 | 0.56 | – | 6 | – | ○ |
| Example 9 | M | ↑ | ↑ | ↑ | 10 | ↑ | ↑ | 24.4 | 198 | 89 | 79 | – | 71 | 0.57 | – | 7 | – | ○ |
| Comparative Example 5 | N | ↑ | 0 | ↑ | 1.0 | ↑ | ↑ | 3.4 | 181 | 94 | – | – | 120 | 0.89 | + | Solidification | + | × |
| Example 10 | O | ↑ | 0.02 | ↑ | ↑ | ↑ | ↑ | 6.5 | 180 | 92 | – | – | 100 | 0.56 | ± | 5 | + | △ |
| Example 11 | P | ↑ | 0.05 | ↑ | ↑ | ↑ | ↑ | 11.2 | 181 | 88 | – | – | 65 | 0.58 | – | 5 | ± | ○ |
| Example 12 | Q | ↑ | 0.10 | ↑ | ↑ | ↑ | ↑ | 17.2 | 181 | 87 | – | – | 71 | 0.56 | – | 5 | ± | ○ |
| Example 13 | R | ↑ | 0.15 | ↑ | ↑ | ↑ | ↑ | 20.0 | 182 | 85 | – | – | 71 | 0.57 | – | 5 | – | ○ |
| Comparative Example 6 | S | ↑ | 0.40 | ↑ | ↑ | ↑ | ↑ | 32.5 | 181 | 68 | – | – | 51 | 0.57 | – | 18 | – | × |
| Example 14 | T | 6.5 | 0.20 | ↑ | ↑ | ↑ | 60 | 23.1 | 182 | 83 | – | 19 | 66 | 0.57 | – | 4.4 * | – | ○ |
| Example 15 | U | ↑ | 0.30 | ↑ | ↑ | ↑ | ↑ | 28.5 | – | 81 | – | 18 | 65 | 0.58 | – | 8.9 * | – | ○ |
| Comparative Example 7 | V | ↑ | 0.40 | ↑ | ↑ | ↑ | ↑ | 33.4 | – | 68 | – | – | 58 | 0.61 | – | 20.4 * | – | × |
| Comparative Example 8 | W | ↑ | 0.20 | – | 0 | ↑ | ↑ | 23.7 | – | 70 | – | – | 39 | 0.55 | – | 49.0 * | – | × |

| | | | | | | | | | | | | | | | | | |
|---|---|---|---|---|---|---|---|---|---|---|---|---|---|---|---|---|---|
| Comparative Example 9 | X | ↑ | 0.10 | – | ↑ | ↑ | ↑ | 14.3 | – | 85 | – | – | 71 | 0.63 | – | Solidification * | ± | × |
| Comparative Example 10 | Y | ↑ | 0.05 | – | ↑ | ↑ | ↑ | 7.7 | – | 96 | – | – | 71 | 0.57 | ± | Solidification * | + | × |
| Comparative Example 11 | Z | 6.0 | 0.20 | Glucose | 1.0 | ↑ | ↑ | 22.8 | 178 | 73 | – | – | 46 | 0.56 | – | 45 | – | × |
| Comparative Example 12 | α | 7.0 | 0.20 | ↑ | ↑ | – | 0 | 21.0 | – | 91 | – | 49 | 65 | 0.58 | + | 18.3 | + | × |
| Comparative Example 15 | Sodium caseinate | | | | | | | 2 | | 98 | 93 | – | 85 | 0.56 | – | 6.7 * | – | × |
| Comparative Example 16 | Fujipro CLE | | | | | | | 23 | | 72 | 91 | – | 35 | 0.58 | – | 52 * | – | × |
| Comparative Example 17 | Supro 710 | | | | | | | 23 | | 68 | 91 | – | 40 | 0.60 | – | 55 * | – | × |

```
* water separation ratio: (*) means storage at 50°C for 24 hours, the others mean storage at 4°C for one week.
```

Although Comparative Example 18 in which the conventional soybean protein material (Supro 710™) was used in the amount of 30% by weight in the total protein had higher coffee whitener viscosity and was improved in water separation ratio after storage as compared with Comparative Example 17 in which 50% by weight of the same protein material was used, Comparative Example 18 was not suitable for practical use. It has been found that the soybean protein material of the present invention is particularly effective for the coffee whitener in which 30% by weight or more of the total protein is the soybean protein, which is hardly realized by a conventional soybean protein material, because the sugar-containing soybean protein material of the present invention can be used in the amount of as much as 50% by weight in the total protein. However, Comparative Example 19 using 70% by weight of soybean protein material U which is the sugar-containing soybean protein material of the present invention undesirably caused feathering and water separation after storage. Then, it has been inferred that the sugar-containing soybean protein material of the present invention is particularly effective when used it as the soybean protein in the amount of 60% by weight or less in the total protein.

## Table 2

(Various Soybean Protein Materials and Physical Properties of Coffee Whiteners)

| | Soybean Protein Material | Production Conditions | | | | Soybean Protein Material Physical Properties | | | | | Liquid Coffee Whitener Physical Properties | | | | | |
| | | Added Sugar | | | | | | | | | | | | | | |
| | | Protease (%) | Type | Amount (%) | Heating Conditions (˚C) | TCA (%) | Amount of Binding Sugar (μmol/g protein) | β-Conglycinin Content (%) | Protein Solubility (%) | Viscosity (25˚C) (mPa•s) | Emulsion Particle Diameter (μm) | Oil-Off | Water Separation Ratio (%) | Feathering | Overall Evaluation |
| Example 2 | C | 0.2 | Glucose | 1.0 | 140 | 25.5 | 181 | 27 | 84 | 65 | 0.61 | - | 5 | - | O |
| Comparative Example 4 | I | 0.2 | ↑ | 0 | ↑ | 23.2 | 175 | 27 | 75 | 50 | 0.58 | - | 35 | - | × |
| Comparative Example 13 | β | 0 | - | ↑ | ↑ | 3.6 | 315 | 91 | 95 | 200 | 0.61 | + | Solidification | + | × |
| Comparative Example 14 | γ | 0.2 | - | ↑ | ↑ | 23.3 | 304 | 90 | 79 | 55 | 0.59 | - | 18 | - | × |

* water separation ratio: storage at 4˚C for one week.

Further, soybean protein materials β and γ have the amounts of binding sugar of more than 300 μmol/g protein because these materials are rich in β-conglycinin which is glycoprotein (Table 2). However, emulsifiability of soybean protein material β was low because the material had low TCA solubility and much feathering and was solidified after storage. Although the 0.22 M TCA solubility was adjusted to 23.3% by weight in the hydrolysate, i.e., soybean protein material γ, emulsifiability of soybean protein material γ was also low as with soybean protein material Z because the material had the protein solubility of less than 80% by weight and was not capable of suppressing water separation after storage. Thus, it has been confirmed that the reaction with reducing sugar rather than inherent saccharides is required for improving the emulsion stability.

Table 3

(Production Conditions for Soybean Protein Materials, β-Conglycinin Content, Physical Properties of Soybean Protein Materials, and Physical Properties of Coffee Whiteners)

| (Soybean Protein Material) | Comparative Example 15 Sodium caseinate | Comparative Example 16 Fujipro CLE | Comparative Example 17 Supro710 | Comparative Example 18 Supro710 | Example 15 U | Comparative Example 19 U |
|---|---|---|---|---|---|---|
| Production Conditions | | | | | | |
|   Amount of Added Enzyme | – | – | – | – | 0.3% | ← |
|   Amount of Added Sugar | – | – | – | – | Glucose | ← |
| Soybean Protein Material Physical Properties | | | | | | |
|   TCA Solubility (%) | 2 | 23 | 23 | ← | 28.5 | ← |
|   Protein Solubility (%) | 98 | 72 | 68 | ← | 81 | ← |
| Liquid Coffee Whitener Physical Properties | | | | | | |
|   (Soybean Protein /Total Protein) | – | 50% | 50% | 30% | 50% | 70% |
|   25°C viscosity (mPa·s) | 85 | 35 | 40 | 69 | 65 | 48 |
|   Emulsion Particle Diameter (μm) | 0.56 | 0.58 | 0.60 | 0.57 | 0.58 | 0.61 |
|   Oil-Off | – | – | – | – | – | – |
|   Water Separation Ratio (%) | 6.7 | 52.0 | 55.0 | 23.4 | 8.9 | 47.5 |
|   Feathering | – | – | – | – | – | + |
| Overall Evaluation | ○ | × | × | × | ○ | × |

* water separation ratio: storage at 50°C for 24 hours.

Preparation of Powdery Coffee Whitener

Powdery coffee whiteners were prepared by using as protein materials soybean protein material C and sodium caseinate. After heating 50 parts by weight of water to 70˚C, 0.8 part by weight of sodium dihydrogen phosphate was dissolved in the hot water, and 5 parts by weight of a mixture of equal amounts of the above protein material or sodium caseinate was added. Then, 1.0 part by weight of a sugar ester (DX Ester F160™ manufactured by Dai-Ichi Kogyo Seiyaku Co., Ltd.), 18 parts by weight of corn syrup, and 10 parts by weight of glucose were added thereto and the mixture was stirred. Further, 15 parts by weight of hydrogenated rapeseed oil was added to the resulting solution, and the mixture was stirred in a hot water bath at 90˚C to obtain an oil-in-water type emulsion. After homogenizing the oil-in-water type emulsion obtained with a homogenizer at pressure of 100 to 200 $kg/cm^2$, the homogenized oil-in-water type emulsion was sterilized by heating at 80˚C for 10 minutes, and a 2-stage homogenization was performed with a homogenizer at first homogenization pressure of 100 to 300 $kg/cm^2$ and second homogenization pressure of 50 to 100 $kg/cm^2$, followed by spray-drying with a spray drier to obtain powdery coffee whitener.

Evaluation of the powdery coffee whiteners is summarized in Table 4. The powdery coffee whiteners of Example 17 and Comparative Example 20 (sodium caseinate) were free from oil-off and feathering when added to coffee. Thus, they showed very good properties.

Table 4

(Evaluation of Soybean Protein Materials and Physical Properties of Powdery Coffee Whiteners)

| | Soybean Protein Material | Powdery Coffee Whitener Physical Properties | | Evaluation |
|---|---|---|---|---|
| | | Oil-Off | Feathering | |
| Example 17 | C | None | None | ○ |
| Comparative Example 20 | Sodium caseinate | None | None | ○ |

Preparation of Acidic Protein Drink

An acidic protein drink was prepared by using soybean protein material C or Fujipro CLE™ as a protein material. To 90 parts of water were added 0.6 part by weight of the protein material, followed by addition of 2 parts by weight of a whole milk powder, 5 parts by weight of granulated sugar, 0.3 part by weight of Soya Five DH™ (manufactured by Fuji Oil Company, Limited), and 0.04 part by weight of a flavor and thoroughly mixing to obtain a solution. After adjusting pH of the resulting solution to 4.0 with citric acid, homogenization was performed with a homogenizer at pressure of 100 to 200 $kg/cm^2$, followed by heat sterilization at 140˚C for 4 seconds to obtain the acidic protein drink.

Evaluation of Acidic Protein Drink

<Amount of Precipitate after Centrifugation>

About 40 g of the above prepared acidic protein drink was placed in a 50 ml centrifugal tube whose empty weight had been measured in advance, and the weight of the tube was measured. After centrifugation at 3,000 rpm for 10 minutes, the supernatant was discarded to measure the weight of the precipitate.

The evaluation of the acidic protein drink was summarized in Table 5. The amount of the precipitate of the acidic protein drink obtained by using soybean protein material C after centrifugation was small such as about 0.2 and the acidic protein drink had a good flavor (Example 18). In contrast, the acidic protein drink obtained by using the conventional soybean protein, Fujipro CLE™, had a good flavor but was not suitable for practical use due to the large amount of the precipitate after centrifugation such as 1.5 g (Comparative Example 21).

Table 5

(Evaluation of Acidic Protein Drinks)

| | Soybean Protein Material | Acidic Protein Drink Physical Properties | | Evaluation |
|---|---|---|---|---|
| | | Amount of Precipitate after Centrifugation | Flavor | |
| Example 18 | C | 0.2 g | Good | ○ |

(continued)

| (Evaluation of Acidic Protein Drinks) | | | | |
|---|---|---|---|---|
| | Soybean Protein Material | Acidic Protein Drink Physical Properties | | Evaluation |
| | | Amount of Precipitate after Centrifugation | Flavor | |
| Comparative Example 21 | Fujipro CLE | 1.5 g | Good | × |

Preparation of Flour Paste

Flour paste was obtained by using as a protein material soybean protein material C, Fujipro CLE™, or whey protein. To 40 parts by weight of water were added 1 part by weight of the protein material, 18 parts by weight of palm oil, 15 parts by weight of granulated sugar, 15 parts by weight of starch syrup, 4 parts by weight of a skimmed milk powder, and 4 parts by weight of "Starch Delica SE™" (manufactured by Nippon Starch Chemical Co., Ltd.) and the mixture was stirred. The temperature of the solution was raised to 50˚C, 3 parts by weight of dried yoke (manufactured by Kewpie Corporation) was added thereto, and preliminary emulsification was performed by stirring the mixture with raising the temperature to 60˚C. The resulting emulsion was homogenized with a homogenizer at pressure of 50 kg/cm$^2$, and its temperature was raised to 80˚C in a cheese kneader. After cooling, evaluation was performed. Further, the flour paste was filled in bread dough, and the flour paste in the bread after baking was evaluated.

The evaluation of the flour paste was summarized in Table 6. The flour paste obtained by using soybean protein material C (Example 19) and whey protein (Comparative Example 22) were good without any problem in emulsified dough and baking resistance. The flour paste (Comparative Example 23) using Fujipro CLE™ was deficient with poor emulsifiability and weak baking resistance.

Table 6

| (Evaluation of Flour Paste Using Soybean Protein Material) | | | | |
|---|---|---|---|---|
| | Soybean Protein Material | Flour Paste Physical Properties | | Evaluation |
| | | Dough Emulsification State | Baking Resistance | |
| Example 19 | C | Good | Good | ○ |
| Comparative Example 22 | CLE | Poor Emulsification | Deficient | × |
| Comparative Example 23 | Whey Protein | Good | Good | ○ |

Preparation of Choux Margarine

Choux margarine was prepared by using as a protein material soybean protein material C or sodium caseinate. To 20 parts by weight of water were added 3.5 parts by weight of the protein material, 0.5 part by weight of purified salt, and 0.1 part by weight of potassium phosphate and the mixture was stirred. Simultaneously, 75 parts by weight of lard was heated to about 60˚C, and 0.2 part by weight of glycerin fatty acid ester and 0.05 part by weight of soybean lecithin were added thereto, followed by mixing. Both mixtures were mixed with stirring, and the resulting mixture was rapidly kneaded with a combinator to obtain choux margarine.

Preparation of Choux Dough

To 24 parts by weight of water was added 22 parts by weight of the above obtained choux margarine, and the mixture was heated and boiled with stirring. After completion of the heating, 13.5 parts by weight of weak flour, 3.5 parts by weight of strong flour, 0.2 parts by weight of ammonium carbonate, and 0.1 part by weight of baking soda were added, followed by mixing. Then, 37.2 parts by weight of whole egg was added with stirring and the mixture was thoroughly stirred. The thus-obtained choux dough was heated at 200˚C for 15 minutes to obtain choux.

Evaluation of the choux dough obtained by using as raw material the choux margarine obtained by using soybean protein material C or sodium caseinate is summarized in Table 7. Each of the choux dough obtained by using choux margarines prepared by using soybean protein material C (Example 20) and sodium caseinate (Comparative Example 24) had good emulsification state and flavor after baking.

Table 7

(Evaluations of Choux Dough by using Soybean Protein Material)

|  | Soybean Protein Material | Evaluation of Choux | | Evaluation |
|---|---|---|---|---|
|  |  | Dough Emulsification State | Flavor |  |
| Example 20 | C | Good | Good | ○ |
| Comparative Example 24 | Sodium caseinate | Good | Good | ○ |

Preparation of Powdery Emulsified fats and Oils

Powdery emulsified fats and oils were prepared by using protein materials soybean protein material C, Fujipro CLE™, and sodium caseinate. Namely, to 40 parts by weight of water were added 5 parts by weight of the above protein material, and 21 parts by weight of sorbitol, and the mixture was stirred. Simultaneously, 20 parts by weight of rapeseed oil was warmed to about 60˚C, and to the oil were added 10 parts by weight of Emalsy MS-A™ (manufactured by Riken Vitamin Co., Ltd.), 2.5 parts by weight of Rikemal PB-100™ (manufactured by Riken Vitamin Co., Ltd.), 2 parts by weight of Poem W-10™ (manufactured by Riken Vitamin Co., Ltd.), and 0.5 part by weight of SY Glystar™ (manufactured by Sakamoto Yakuhin Kogyo Co., Ltd.), followed by mixing. The mixture was further stirred, homogenized at pressure of 30 to 200 kg/cm$^2$ with a homogenizer, followed by spray-drying with a spray drier.

Evaluation of the powdery emulsified fats and oils were summarized in Table 8. The powdery emulsified fats and oils obtained by using soybean protein material C (Example 21) and sodium caseinate (Comparative Example 25) were good with good powder quality and being free from oil-off when dissolved into water. In contrast, although the powdery emulsified fats and oils obtained by using Fujipro CLE™ (Comparative Example 26) had good powder quality, oil-off was observed when dissolved into water.

Table 8

(Evaluation of Powdery Emulsified Fats and Oils using Soybean Protein Material)

|  | Soybean Protein Material | Powdery Emulsified Fats and Oils Physical Properties | | Evaluation |
|---|---|---|---|---|
|  |  | powder Quality | Oil-Off |  |
| Example 21 | C | Good | - | ○ |
| Comparative Example 25 | Fujipro CLE | Good | ± | × |
| Comparative Example 26 | Sodium caseinate | Good | - | ○ |

Claims

1. A method for producing a sugar-containing soybean protein material, which comprises: mixing a soybean protein raw material with a reducing sugar; performing a heat treatment at pH 6.3 to 8.0 at a temperature higher than 100˚C and 170˚C or lower for 10 to 300 seconds; and performing a hydrolysis treatment.

2. The method for producing a sugar-containing soybean protein material according to claim 1, wherein the reducing sugar is added in a ratio of 0.5% by weight or more per dry weight of the soybean protein raw material.

3. The method for producing a sugar-containing soybean protein material according to claim 1, wherein the soybean protein material contains 80% by weight or more of protein on a dry weight basis and has the 0.22 M TCA solubility of 5% by weight or more.

4. The method for producing a sugar-containing soybean protein material according to claim 1, wherein the soybean protein material has the protein solubility of 80% by weight or more.

5. A sugar-containing soybean protein material comprising 80% by weight or more of protein on a dry weight basis, wherein the 0.22 M TCA solubility is 5% by weight or more and 35% by weight or less, and 180 $\mu$mol or more of a sugar is bound per g of protein.

6. The sugar-containing soybean protein material according to claim 5, wherein the $\beta$-conglycinin content in protein by an ELISA method is 35% or less.

7. The sugar-containing soybean protein material according to claim 5, wherein the protein solubility is 80% by weight or more.

8. A food or drink obtainable by using the sugar-containing soybean protein material according to claim 5 or the sugar-containing soybean protein material produced by the method according to claim 1.

9. The food or drink according to claim 8, which is an emulsified composition.

10. The food or drink according to claim 9, which is selected from the group consisting of coffee whitener, flour paste, margarine, and an emulsified fat or oil.

11. The food or drink according to claim 8, which is an acidic protein drink.

12. A soybean protein material, wherein the 0.22 M TCA solubility is 15% by weight or more and 30% by weight or less; the protein solubility is 80% by weight or more; and the total content of $\beta$-conglycinin and glycinin in total protein by SDS-PAGE is 30% or less.

13. The soybean protein material according to claim 12, which is used for coffee whitener.

14. Coffee whitener obtainable by using the soybean protein material according to claim 12.

15. The coffee whitener according to claim 14, wherein the soybean protein material is soybean protein isolate.

**INTERNATIONAL SEARCH REPORT**

| | International application No. |
|---|---|
| | PCT/JP2008/073402 |

A. CLASSIFICATION OF SUBJECT MATTER
A23J3/16(2006.01)i, A23L1/19(2006.01)i

According to International Patent Classification (IPC) or to both national classification and IPC

B. FIELDS SEARCHED

Minimum documentation searched (classification system followed by classification symbols)
A23J3/16, A23L1/19

Documentation searched other than minimum documentation to the extent that such documents are included in the fields searched
Jitsuyo Shinan Koho        1922-1996   Jitsuyo Shinan Toroku Koho    1996-2009
Kokai Jitsuyo Shinan Koho   1971-2009   Toroku Jitsuyo Shinan Koho    1994-2009

Electronic data base consulted during the international search (name of data base and, where practicable, search terms used)
JMEDPlus(JDream2), JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| Y | WO 2005/089565 A1  (Fuji Oil Co., Ltd.), 29 September, 2005 (29.09.05), (Family: none) | 1-15 |
| Y | WO 2003/022069 A1  (Fuji Oil Co., Ltd.), 20 March, 2003 (20.03.03), & JP 4103797 B        & CN 1551730 A | 1-15 |
| Y | JP 9-275911 A  (Fuji Oil Co., Ltd.), 28 October, 1997 (28.10.97), (Family: none) | 1-15 |
| Y | JP 11-18687 A  (Fuji Oil Co., Ltd.), 26 January, 1999 (26.01.99), (Family: none) | 8-11,14,15 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 March, 2009 (13.03.09) | 24 March, 2009 (24.03.09) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2008/073402

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 6-70691 A  (Fuji Oil Co., Ltd.),<br>15 March, 1994 (15.03.94),<br>(Family: none) | 8-11,14,15 |
| A | JP 1-71440 A  (Fuji Oil Co., Ltd.),<br>16 March, 1989 (16.03.89),<br>(Family: none) | 1-15 |
| A | JP 9-107886 A  (Taiyo Kagaku Co., Ltd.),<br>28 April, 1997 (28.04.97),<br>(Family: none) | 1-15 |

Form PCT/ISA/210 (continuation of second sheet) (April 2007)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 51144764 A
- JP 6303901 A
- JP 6030698 A

- JP 2000312562 A
- JP 2005187401 A
- WO 0228198 A